# EUROPEAN PATENT APPLICATION

(11) **EP 0 687 409 A1**
(43) Date of publication of application: **20.12.1995**
(21) Application number: 95304032.6
(22) Date of filing: 12.06.1995
(51) Int. Cl.: A01G 3/053

(54) **Improved cutting device**

(30) Priority: 18.06.1994 GB 9412269
(71) Applicant: Black & Decker Inc., Newark Delaware 19711 (US)
(72) Inventor: Stones, Kevin, Bishop Auckland, County Durham DL14 6AE (GB)
(74) Representative: Stagg, Diana Christine

(57) **Abstract**

A hand-held, power driven reciprocating blade type cutting device comprises
a cutting blade (14,16);
a rotatable shaft (20);
means (6) for providing rotary driving power input at the rotatable shaft (20) and
reciprocation generating means for converting the rotary power output of the rotatable shaft (20) to a translational output to drive the blade (14,16).

The reciprocation generating means comprises a gear element (66,85) adapted to be driven in rotation either directly or indirectly by the rotatable shaft (20) and formed with at least one cam track (70,80,82) either in the plane of, or in a plane substantially parallel to the plane of translation of the blade. The at least one cam track is substantially circular and eccentrically positioned with respect to the axis of rotation of the gear element.

The reciprocation generating means further comprises an arcuate cam follower (74,86,88,90), adapted to be located in the cam track (70,80,82) and adapted to contact a segment of the inner face of the cam track, for driving engagement with the cutting blade (14,16).

The driving engagement between the arcuate cam follower and the cutting blade, preferably comprises a pin (76,90) and a corresponding aperture (78), the pin preferably being formed in the cam follower (74,86,88,90) and the aperture in the cutting blade (14,16).

## Description

The present invention relates to a hand-held, power driven reciprocating blade type cutting device, in particular a hedge-trimmer or reciprocating saw.

Such hand-held, power driven reciprocating blade type cutting devices generally include reciprocation generating means for converting the rotary power output of the rotatable shaft to a translational output to drive the blade, and an example of such a reciprocation generating means is described in United States Patent No 3,897,630.

Such reciprocation generating means have the disadvantage that the contact between the drive pin and the aperture in the blade with which the pin is in driving engagement is effectively a point contact, generating frictional forces and leading to wear on the pin and a consequent increase in the noise level resulting from operation of the device. Because of the frictional forces generated and consequent temperature rises, and in order to reduce the effect of wear, the components cannot be made from synthetic plastics materials but must be made from hardened materials and with high tolerances, with a consequent increase in costs.

It is an object of the present invention to provide a hand held, power drive, reciprocating blade type cutting device in which the above disadvantages are reduced or substantially obviated.

The present invention therefore provides a hand-held, power driven reciprocating blade type cutting device comprising
a cutting blade;
a rotatable shaft;
means for providing rotary driving power input at the rotatable shaft and
reciprocation generating means for converting the rotary power output of the rotatable shaft to a translational output to drive the blade, characterised in that the reciprocation generating means comprises
a gear element adapted to be driven in rotation either directly or indirectly by the rotatable shaft and formed with at least one cam track either in the plane of, or in a plane substantially parallel to the plane of translation of the blade;
the at least one cam track being substantially circular and eccentrically positioned with respect to the axis of rotation of the gear element and
an arcuate cam follower, adapted to be located in the cam track and adapted to contact a segment of the inner face of the cam track, for driving engagement with the cutting blade.

In a preferred embodiment of a hand-held, power driven reciprocating blade type cutting device according to the invention the driving engagement between the arcuate cam follower and the cutting blade comprises a pin and a corresponding aperture, with the arcuate cam follower preferably formed with a pin for engaging in driving engagement with a corresponding aperture in the cutting blade.

An embodiment of a hedge trimmer according to the invention will now be described with reference to the accompanying drawings in which
Figure 1 is a view of a hedge trimmer;
Figure 2 is a side view, in section, of part of the hedge trimmer of Figure 1;
Figure 3 is an exploded perspective view of part of the hedge trimmer of Figure 1; and
Figure 4 is an exploded perspective view of part of an alternative embodiment of a hedge trimmer according to the invention.
Figure 5 is a perspective view of an improved design of cam follower.

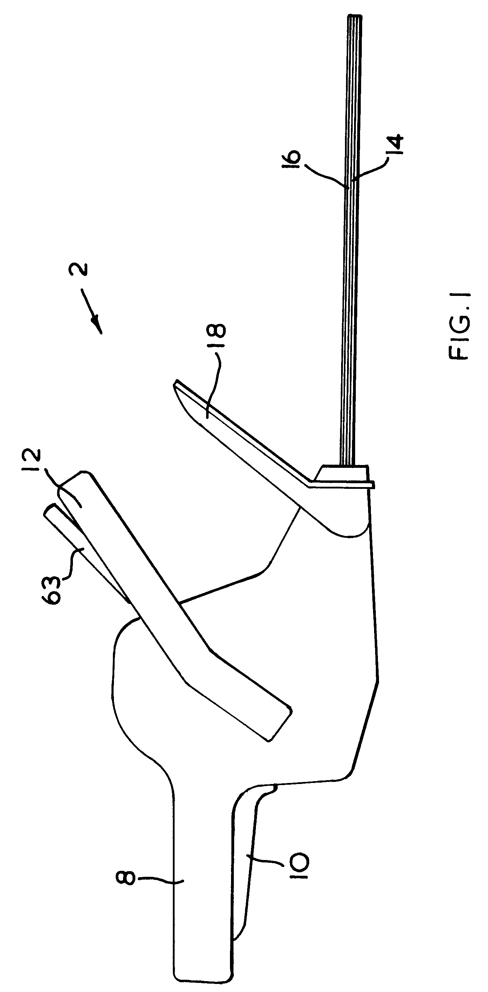

As can be seen from Figure 1, a hedge clipper shown generally at (2) comprises a housing (4) within which is located an electric motor (6). A primary handle (8) is provided with a trigger switch actuator (10). A secondary handle (12) is provided with an actuating mechanism (63). Two blades (14,16) are mounted in known manner in the housing (4) for driving by the motor (6). A guard (18) is mounted on the housing (4), also in known manner to protect the operator.

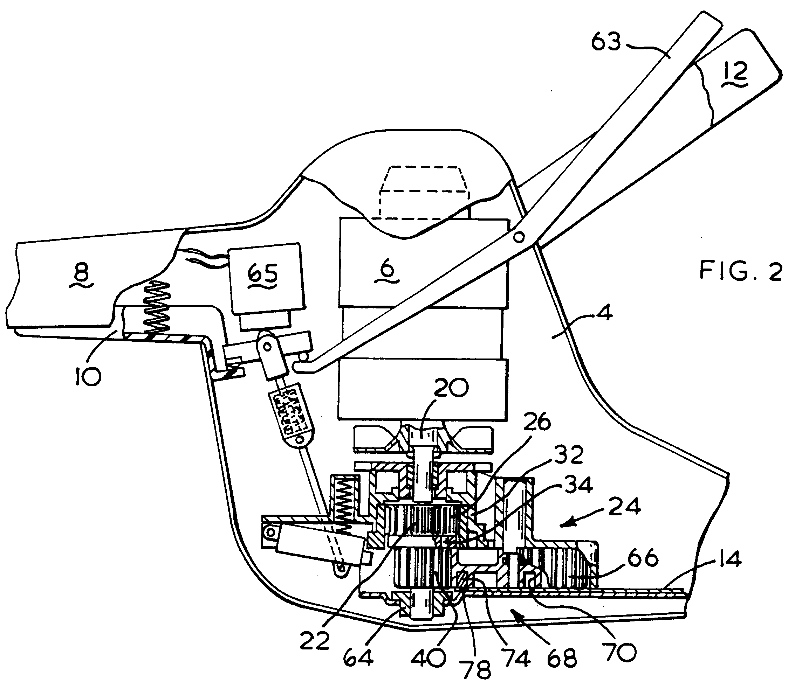

As can be seen from Figure 2, the motor (6) comprises an output shaft (20) which is secured to a sun gear (22) which forms part of a speed reduction gear train (24) comprising planetary gears (26,28,30) and a ring gear (32). The speed reduction gear train (24) is located within a gear box (25).

Such a speed reduction gear train is described and claimed in our copending European patent application No .......... (Applicants Ref: F16767) of even date herewith, but the reciprocation generating means for converting the rotary power output of the rotatable shaft to a translational output to drive the blade described and claimed in the present application may be used in conjunction with any suitable speed reduction mechanism, including known speed reduction mechanisms.

The sun gear (22) engages with the gears of three planetary gears (26,28,30), the spindles (34,36,38) of which are in the form of needle rollers and are fixed in an output carrier (40).

The output carrier (40) is mounted in an output bearing (64) and engages with an output gear (66) which is itself connected to a reciprocation generating means (68) for converting the rotational output of the output gear (66) to a translational output to drive at least one blade (14,16).

The reciprocation generating means (68) comprises a gear element (66) with a substantially circular cam track (70) formed in one face (72) of the gear element (66). The cam track (70) is positioned eccentrically with respect to the axis of rotation of the gear element (66) and is adapted to receive a cam follower (74). The cam follower (74) is arcuate in shape, the arc having the same radius as the cam track (70), and subtending an angle of approximately 90°.

The arcuate cam follower (74) is of substantially the same width as the cam track (70) and is formed with a pin (76) which projects above the face (72) of the gear element (66) when the cam follower (74) is located in the cam track (70).

A cutting blade (14) is formed with an aperture (78) for engagement with the pin (76). When the blade (14) is mounted in the unit, the pin engages in driving engagement with the aperture (78). The blade (14) is mounted in known manner and is constrained in known manner to move in the direction of its longitudinal axis.

In operation, when the motor (6) is switched on, the output gear element (66) is driven in rotation by the output shaft (20) via the speed reduction gear train (24), and the cam follower (74) is driven along the cam track (70). The blade (14) is then driven by its engagement with the drive pin (76) in reciprocation along its longitudinal axis.

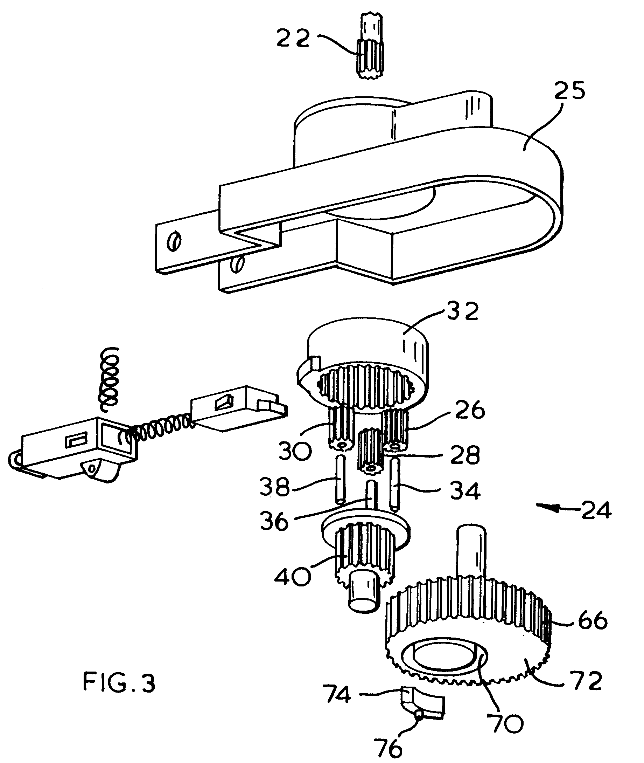

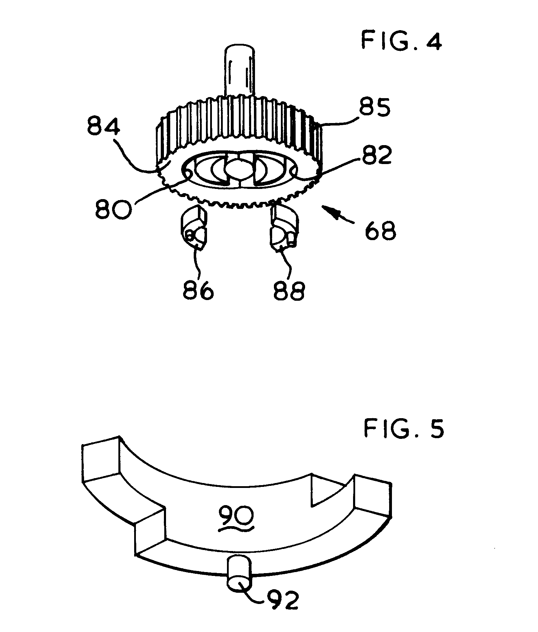

In an alternative embodiment of a hedge cutter according to the invention, as shown in Figure 4, a pair of blades (14,16) are driven by a single output gear element (85). Two substantially circular cam tracks (80,82) are formed in the face (84) of the gear element (85) and are eccentrically located with respect to the axis of rotation of the gear element (85) and overlap each other. Two cam followers (86,88) are located in the cam tracks (80,82) and drive the two blades in the same way as described for the single action embodiment described above with reference to Figures 1 to 3.

While in the embodiments shown above, the cam followers have been shown having an arc length which subtends approximately 90°, the cam followers can in fact be of any suitable length provided that contact is made along at least a segment of the internal radius of the cam track. In the case of a single action unit, the cam follower may even be annular and engage in the complete circumference of the cam track.

An improved design of cam follower (90) for use with the reciprocation generating means (68) with two cam tracks (80,82) is shown in Figure 5. The cam follower (90) has a stepped profile. This increases the area of contact between cam followers (90) and the internal radius of the cam tracks (80,82) without resulting in collision of the two cam followers as they move around the cam tracks (80,82). Increasing the area of contact between the cam followers and the internal radius of the cam tracks reduces the amount of wear on the cam follower.

## Claims

**1** A hand-held, power driven reciprocating blade type cutting device comprising
a cutting blade (14,16);
a rotatable shaft (20);
means (6) for providing rotary driving power input at the rotatable shaft and
reciprocation generating means for converting the rotary power output (40) of the rotatable shaft to a translational output to drive the blade (14,16), characterised in that the reciprocation generating means comprises
a gear element (66,85) adapted to be driven in rotation either directly or indirectly by the rotatable shaft (20) and formed with at least one cam track (70,80,82) either in the plane of, or in a plane substantially parallel to the plane of translation of the blade (14,16);
the at least one cam track (70,80,82) being substantially circular and eccentrically positioned with respect to the axis of rotation of the gear element (66,85) and
an arcuate cam follower (74,86,88,92), adapted to be located in the cam track (70,80,82) and adapted to contact a segment of the inner face of the cam track, for driving engagement with the cutting blade (14,16).

**2** A hand-held, power driven reciprocating blade type cutting device according to Claim 1 characterised in that the driving engagement between the arcuate cam follower and the cutting blade comprises a pin (76,86,88,92) and a corresponding aperture (78).

**3** A hand-held, power driven reciprocating blade type cutting device according to Claim 2 characterised in that the arcuate cam follower (74,86,88,90) is formed with a pin (76,92) for engaging in driving engagement with a corresponding aperture (78) in the cutting blade (14,16).

**4** A hand-held, power driven reciprocating blade type cutting device according to any of Claims 1 to 3 characterised in that the device further comprises speed reduction means (26,28,30,32) for receiving the power input from the rotatable shaft (20) and delivering a relatively low speed rotary power output (40).

**5** A hand-held, power drive reciprocating blade type cutting device according to any one of Claims 1 to 4 characterised in that the device is a dual action cutting device and two cam tracks (80,82) are formed in the gear element (85).

**6** A hand-held, power driven reciprocating blade type cutting device according to claim 5 characterised in that the cam followers (90) have a stepped profile.

**7** A hand-held, power driven reciprocating blade type cutting device substantially as herein described with reference to the accompanying drawings.
